# EUROPÄISCHE PATENTSCHRIFT

(11) **EP 1 257 966 B1**
(45) Veröffentlichungstag und Bekanntmachung des Hinweises auf die Patenterteilung: **01.08.2007**
(21) Anmeldenummer: 01913562.3
(22) Anmeldetag: 02.02.2001
(51) Int. Cl.: G06K 13/08

(54) **KARTENLESER MIT AN SCHWENKARMEN GELAGERTEN TRANSPORTROLLEN**
CARD READER WITH CONVEYOR ROLLERS MOUNTED ON SWIVEL ARMS
LECTEUR DE CARTES DOTE DE ROULEAUX DE TRANSPORT MONTES SUR DES BRAS ARTICULES

(30) Priorität: 09.02.2000 DE 10005358
(43) Veröffentlichungstag der Anmeldung: 20.11.2002
(73) Patentinhaber: ddm hopt + schuler GmbH & Co. KG, D-78628 Rottweil (DE)
(72) Erfinder: HOPT, Jürgen, 78628 Rottweil (DE); RAPP, Hans-Jochen, 78628 Rottweil (DE); STORZ, Michael, 78467 Konstanz (DE)
(74) Vertreter: Kohler Schmid Möbus
(86) Internationale Anmeldenummer: PCT/DE2001/000398
(87) Internationale Veröffentlichungsnummer: WO 2001/059695

(56) Entgegenhaltungen:
- EP-A- 0 687 990
- GB-A- 2 327 667
- US-A- 4 442 769
- PATENT ABSTRACTS OF JAPAN vol. 1998, no. 13, 30. November 1998 (1998-11-30) & JP 10 207989 A (NEURON:KK), 7. August 1998 (1998-08-07)

## Beschreibung

Die Erfindung betrifft einen Kartenleser mit mindestens zwei in Karteneinführrichtung hintereinander angeordneten Transportrollen für die Karte, wobei die Transportrollen an zwei Schwenkarmen, die jeweils in einer zur Kartenbahn rechtwinkligen Ebene gegen die Wirkung einer Rückstellkraft verschwenkbar sind, im Abstand zur Schwenkachse ihres Schwenkarms vorgesehen sind, wobei der eine Schwenkarm, dessen Schwenkachse in Karteneinführrichtung hinter seiner mindestens einen Transportrolle vorgesehen ist, und der andere Schenkarm, dessen Schwenkachse in Karteneinführrichtung vor seiner mindestens einen Transportrolle vorgesehen ist, miteinander gegenläufig bewegungsgekoppelt sind.

Ein derartiger Kartenleser ist beispielsweise durch Patent Abstracts of Japan Bd. 1998, Nr. 13 oder durch JP 10 207989 A bekannt geworden.

Kartenleser dienen zum Datenaustausch beispielsweise mit einer Magnetkarte, auf deren Magnetstreifen die Daten gespeichert sind, oder mit einer Chipkarte, auf deren Chip bzw. integriertem Schaltkreis die Daten gespeichert sind.

Es sind Kartenleser mit Transportrollen bekannt, die die Karte in eine Datenaustauschposition einziehen und nach dem Datenaustausch entweder wieder zurücktransportieren oder in Einführrichtung weitertransportieren. In der Datenaustauschposition wird die Karte mittels eines Lesekopfes gelesen, der einer mittleren Transportrolle gegenüberliegt und so gleichzeitig das Gegenlager für die transportierte Karte bildet. Vor und hinter dieser mittleren Transportrolle ist jeweils eine weitere Transportrolle vorgesehen, wobei alle drei Transportrollen gegen die Wirkung einer Rückstellkraft aus der Kartenbahn auslenkbar sind. Wenn bei diesem bekannten Kartenleser die Karte, angetrieben von der mittleren Transportrolle für einen Datenaustausch am Schreib-/Lesekopf hin- und her bewegt wird, läuft die Karte zwangsläufig an den nicht ausgelenkten vorderen oder hinteren Transportrollen auf, so dass diese gegebenenfalls ausgelenkt werden. Dieses Anstoßen der Karte an andere Transportrollen, insbesondere während eines gerade stattfindenden Datenaustauschs, beeinträchtigt die Funktionsweise des Kartenlesers und kann zu Störungen und Fehlern beim Datenaustausch führen.

Bei dem aus Patent Abstracts of Japan Bd. 1998, Nr. 13 oder aus JP 10 207989 A bekannten Kartenleser sind die Transportrollen an zwei Schwenkarmen angeordnet, die miteinander durch Federn gegenläufig bewegungsgekoppelt sind.

Weiterhin ist aus DE 3441849 A noch ein Kartenleser zum reibschlüssigen Transport einer Karte relativ zu einer Auswertevorrichtung bekannt, die an einem sich zwischen einer Eintrittsstelle und einer Austritts- bzw. Umkehrstelle erstreckenden gradlinigen Förderweg angeordnet ist. Der gradlinige Förderweg ist einerseits durch einen Abschnitt eines Endlosbandförderers und andererseits durch eine etwa parallel zu diesem Abschnitt verlaufende, in Richtung zum Endlosbandförderer bewegbare Andruckleiste begrenzt. Die Andruckleiste ist mittels einer Andruckeinrichtung in Richtung zum Endlosbandförderer belastet. Dabei werden Rollen als direkte Antriebsmittel vermieden und ein einwandfreier Transport auch mangelhafter Karten gewährleistet.

Es ist daher die Aufgabe der Erfindung, bei einem Kartenleser der eingangs genannten Art eine zur bekannten Federkopplung alternative Bewegungskopplung der beiden Schwenkarme bereitzustellen.

Diese Aufgabe wird erfindungsgemäß dadurch gelöst, dass die beiden Schwenkarme zwischen ihren beiden Schwenkachsen gelenkig miteinander verbunden sind und jeder Schwenkarm mindestens zwei Transportrollen aufweist.

Von besonderem Vorteil ist es, wenn die beiden Schwenkarme über die Drehachse einer beiden Schwenkarmen gemeinsamen Transportrolle gelenkig miteinander verbunden sind. Sofern diese gemeinsame Transportrolle für beide Schwenkarme auch die der den Schwenkachsen nächste Transportrolle ist, sind alle anderen Transportrollen stets weiter als diese gemeinsame Transportrolle ausgelenkt.

Vorzugsweise ist ein Lese- und/oder Schreibkopf des Kartenlesers im Bereich der gemeinsamen Transportrolle vorgesehen. Diese Maßnahme hat den Vorteil, dass die Karte, angetrieben nur von der gemeinsamen Transportrolle, in beide Richtung gleich weit am Lese- und/oder Schreibkopf vorbeibewegt werden kann.

Die Rückstellkraft kann zum Beispiel durch eine auf die gelenkige Verbindung beider Schwenkarme wirkende Feder gebildet sein, so dass die Transportrollen beider Schwenkarme in ihre in die Kartenbahn eingreifende Lage vorgespannt sind.

Bei einer konstruktionsmäßig besonders einfachen Ausführungsform der Erfindung sind die Transportrollen zwischen den beiden Seitenwänden eines im Querschnitt U-förmigen Schwenkarms gelagert. Bevorzugt ist dabei, dass der eine U-förmige Schwenkarm schmaler als der andere U-förmige Schwenkarm ist und zwischen dessen Seitenwände eingreift.

Weiterhin sind auf der den Transportrollen gegenüberliegenden Seite der Kartenbahn jeder Transportrolle jeweils eine Gegenrolle als Gegenlager für die transportierte Karte vorgesehen.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: schematisch die Bewegungsabfolge in einem nicht zur Erfindung gehörenden Kartenleser mit einem Schwenkarm beim Einführen einer Karte zu drei verschiedenen Zeitpunkten;
- Fig. 2: schematisch die Bewegungsabfolge in dem erfindungsgemäßen Kartenleser mit zwei Schwenkarmen beim Einführen einer Karte zu vier verschiedenen Zeit punkten;
- Fig. 3: ein Ausführungsbeispiel des erfindungsgemäßen Kartenlesers mit zwei Schwenkarmen und eingeführter Karte in einem Längsschnitt gemäß III-III in Fig. 4;
- Fig. 4: eine Draufsicht auf den in Fig. 3 gezeigten Kartenleser.

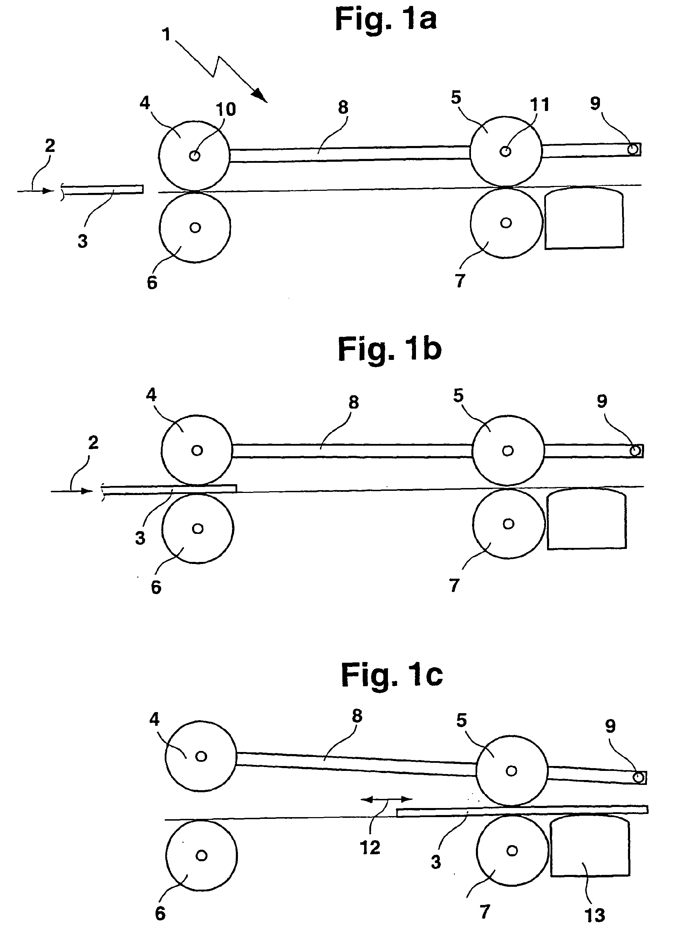

Der in **Fig.1** schematisch dargestellte Kartenleser **1** umfasst zwei in Einführrichtung **2** der Karte 3 hintereinander angeordnete Transportrollen **4, 5,** mittels denen die Karte **3** in und entgegen der Einführrichtung 2 transportiert werden kann. Auf der den Transportrollen 4, 5 gegenüberliegenden Seite der Kartenbahn sind jeweils Gegenrollen **6, 7** als ortsfestes Gegenlager für die transportierte Karte 3 vorgesehen. Die beiden Transportrollen 4, 5 sind an einem Schwenkarm **8** gelagert, der in einer zur Kartenbahn rechtwinkligen Ebene gegen die Wirkung einer Rückstellfeder (nicht gezeigt) verschwenkbar ist. Die ortsfeste Schwenkachse **9** des Schwenkarms 8 ist in Karteneinführrichtung 2 vor den beiden Transportrollen 4, 5 vorgesehen, so daß deren Drehachsen **10, 11** von der Schwenkachse 9 beabstandet sind.

Solange die Karte 3 noch nicht in den Kartenleser 1 eingeführt ist, liegen die Transportrollen 4, 5, von der Rückstellfeder kraftbeaufschlagt, an ihren Gegenrollen 6, 7 an **(Fig. 1a).** Beim Einführen der Karte 3 zwischen die hintere Transportrolle 4 und deren Gegenrolle 6 wird der Schwenkarm 8 im Uhrzeigersinn um die Schwenkachse 9 verschwenkt, bis die hintere Transportrolle 4 um die Kartenstärke von ihrer Gegenrolle 6 angehoben ist **(Fig. 1b).** Durch den verschwenkten Schwenkarm 8 ist auch die vordere Transportrolle 5 von ihrer Gegenrolle 7 angehoben, allerdings um weniger als die Kartenstärke. Von der hinteren Transportrolle 4 angetrieben, wird die Karte 3 weiter in Einführrichtung 2 transportiert, bis sie zwischen die vordere Transportrolle 5 und deren Gegenrolle 7 gelangt. Dadurch wird der Schwenkarm 8 noch weiter im Uhrzeigersinn verschwenkt, bis die vordere Transportrolle 5 um die Kartenstärke von ihrer Gegenrolle 7 angehoben ist **(Fig. 1c).** Die hintere Transportrolle 6, die weiter als die vordere Transportrolle 5 von der Schwenkachse 9 beabstandet ist, ist dann um mehr als die Kartenstärke angehoben und damit aus der Kartenbahn vollständig herausgeschwenkt. Daher kann die Karte 3, angetrieben von der vorderen Transportrolle 5, in und entgegen der Einführrichtung (Doppelpfeil **12)** an einem Schreib-/Lesekopf 13 für einen Datenaustausch vorbeibewegt werden, ohne daß die hintere Transportrolle 4 diese Bewegung behindert.

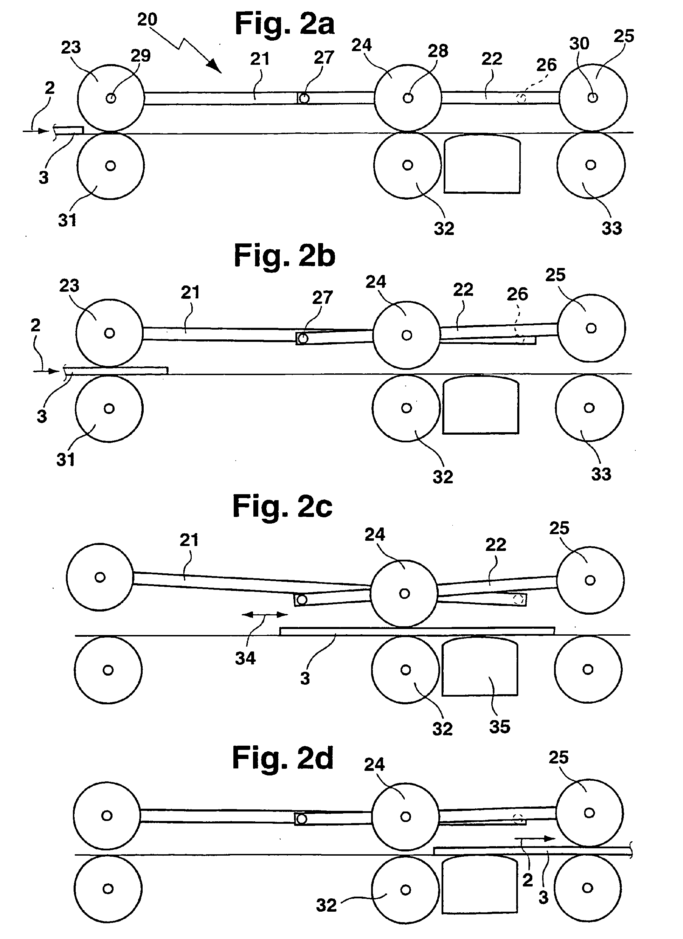

Der in **Fig. 2** schematisch dargestellte Kartenleser **20** umfaßt zwei Schwenkarme **21, 22** sowie drei in Einführrichtung 2 hintereinander angeordnete Transportrollen **23, 24, 25.** Die Schwenkarme 21, 22 sind jeweils in einer zur Kartenbahn rechtwinkligen Ebene gegen die Wirkung von Rückstellfedern (nicht gezeigt) verschwenkbar. Die ortsfeste Schwenkachse **26** des sich nach hinten erstreckenden Schwenkarms 21 befindet sich vor der ortsfesten Schwenkachse **27** des sich nach vorne (d.h. in Einführrichtung 2) erstreckenden Schwenkarms 22. Zwischen ihren Schwenkachsen 26, 27 sind die beiden Schwenkarme 21, 22 über eine gemeinsame Drehachse **28** gelenkig miteinander verbunden und damit miteinander gegenläufig bewegungsgekoppelt. Am freien Ende des Schwenkarms 21 ist um die Drehachse **29** die hintere Transportrolle 23 und am freien Ende des Schwenkarms 22 um die Drehachse 30 die vordere Transportrolle 25 gelagert, während die mittlere Transportrolle 24 um die gemeinsame Drehachse 28 gelagert ist.

Solange die Karte 3 noch nicht in den Kartenleser 20 eingeführt ist, liegen die Transportrollen 23, 24, 25, von den Rückstellfedern kraftbeaufschlagt, an ihren Gegenrollen **31, 32, 33** an **(Fig. 2a).** Beim Einführen der Karte 3 zwischen die hintere Transportrolle 23 und deren Gegenrolle 31 wird der Schwenkarm 21 im Uhrzeigersinn um seine Schwenkachse 26 verschwenkt, bis die hintere Transportrolle 23 um die Kartenstärke von ihrer Gegenrolle 31 angehoben ist. Durch den verschwenkten Schwenkarm 21 ist auch die gemeinsame mittlere Transportrolle 24 von ihrer Gegenrolle 32 angehoben, allerdings um weniger als die Kartenstärke. Durch die angehobene mittlere Transportrolle 24 ist auch der andere Schwenkarm 22 entgegen dem Uhrzeigersinn um seine Schwenkachse 27 verschwenkt und damit auch die vordere Transportrolle 25 von ihrer Gegenrolle 33 abgehoben **(Fig. 2b).** Von der hinteren Transportrolle 23 angetrieben, wird die Karte 3 weiter in Einführrichtung 2 transportiert, bis sie zwischen die mittlere Transportrolle 24 und deren Gegenrolle 32 gelangt. Dadurch werden der Schwenkarm 21 im Uhrzeigersinn und der Schwenkarm 22 entgegen dem Uhrzeigersinn noch weiter verschwenkt, bis die mittlere Transportrolle 24 um die Kartenstärke von ihrer Gegenrolle 32 angehoben ist. Dann sind die vordere und hintere Transportrollen 23, 25 um mehr als die Kartenstärke angehoben und damit aus der Kartenbahn vollständig herausgeschwenkt. Die Karte 3 kann, angetrieben allein von der mittleren Transportrolle 24, in und entgegen der Einführrichtung 2 (Doppelpfeil **34),** an einem Schreib-/ Lesekopf **35** für einen Datenaustausch vorbeibewegt werden, ohne daß die vordere und hintere Transportrollen 23, 25 diese Bewegung behindern **(Fig. 2c).** Sobald sich die in Einführrichtung 2 weitertransportierte Karte 3 nicht mehr zwischen mittlerer Transportrolle 24 und Gegenrolle 32 befindet, schwenken die beiden Schwenkarme 21, 22 unter der Wirkung der Rückstellfedern so weit zurück, bis die vordere Transportrolle 25 auf der Karte 3 aufliegt und damit nur noch um die Kartenstärke angehoben ist **(Fig. 2d).**

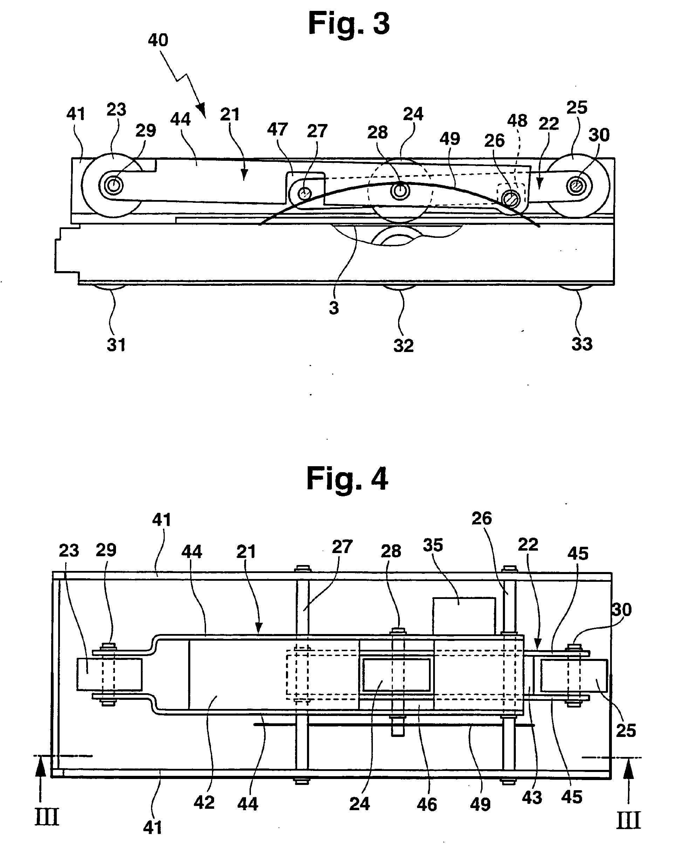

In **Fig. 3** und **Fig. 4** ist ein konkretes Ausführungsbeispiel eines Kartenlesers **40** gezeigt, wobei für funktionsgleiche Bauteile die gleichen Bezugsziffern wie in Fig. 2 verwendet sind. Zwischen den beiden seitlichen Gehäusewänden **41** des Kartenlesers 40 sind die beiden Schwenkachsen 26, 27 ortsfest gehalten. Die beiden Schwenkarme 21, 22 sind im Querschnitt U-förmig mit Grundfläche **42** bzw. **43** und Seitenwänden **44** bzw. **45** ausgebildet, wobei der Schwenkarm 22 schmaler als der Schwenkarm 21 ist und zwischen dessen Seitenwände 44 eingreift. Die Drehachse 29 ist in den beiden Seitenwänden 44 und die Drehachse 30 in den Seitenwänden 45 gehalten, so daß sich die Transportrollen 23 und 24 zwischen den Seitenwänden 44 bzw. 45 befinden. Die gemeinsame Drehachse 28 ist sowohl in den Seitenwänden 44 als auch in den Seitenwänden 45 gehalten, wobei sich die mittlere Transportrolle 24 zwischen den Seitenwänden 45 befindet. In der Grundfläche 42 des Schwenkarms 21 ist eine Aussparung **46** vorgesehen, durch die die mittlere Transportrolle 24 hindurchgreift, wenn sie angehoben ist (Fig. 3). Damit die Schwenkachsen 26, 27 die Bewegung der Schwenkarme 21, 22 nicht behindern, sind in den Seitenwänden 44, 45 im Bereich der Schwenkachsen 26, 27 entsprechende Aussparungen **47, 48** vorgesehen. Eine an den Schwenkachsen 27, 28 abgestützte Schenkelfeder **49** liegt an der Drehachse 28 an, so daß die beiden Schwenkarme 21, 22 mit ihren Transportrollen 23, 24, 25 in Anlage an die Gegenrollen 31, 32, 33 vorgespannt sind.

Abschließend wird noch darauf hingewiesen, daß abweichend von der in den Figuren gezeigten Anordnung der Schreib-/Lesekopf 13 bzw. 35 vorzugsweise deckungsgleich zu der Gegenrolle 7 bzw. 32, d.h. auf Höhe der Transportrolle 5 bzw. 24, angeordnet ist. Die gezeigte, zu der Gegenrolle 7 bzw. 32 versetzte Anordnung des Schreib-/Lesekopfes 13 bzw. 35 wurde lediglich zur besseren Darstellbarkeit gewählt.

## Patentansprüche

1. Kartenleser(20; 40) mit mindestens zwei in Karteneinführrichtung (2) hintereinander angeordneten Transportrollen (23, 24, 25) für die Karte (3), wobei die Transportrollen (23, 24, 25) an zwei Schwenkarmen (21, 22), die jeweils in einer zur Kartenbahn rechtwinkligen Ebene gegen die Wirkung einer Rückstellkraft verschwenkbar sind, im Abstand zur Schwenkachse (26, 27) ihres Schwenkarms (21, 22) vorgesehen sind, wobei der eine Schwenkarm (22), dessen Schwenkachse (27) in Karteneinführrichtung (2) hinter seiner mindestens einen Transportrolle (24, 25) vorgesehen ist, und der andere Schenkarm (21), dessen Schwenkachse (26) in Karteneinführrichtung (2) vor seiner mindestens einen Transportrolle (23, 24) vorgesehen ist, miteinander gegenläufig bewegungsgekoppelt sind,
**dadurch gekennzeichnet,**
**dass** die beiden Schwenkarme (21, 22) zwischen ihren beiden Schwenkachsen (26, 27) gelenkig miteinander verbunden sind und jeder Schwenkarm (21, 22) mindestens zwei Transportrollen (23, 24; 24, 25) aufweist.

2. Kartenleser nach Anspruch 1, **dadurch gekennzeichnet, dass** die beiden Schwenkarme (21, 22) über die Drehachse (28) einer beiden Schwenkarmen (21, 22) gemeinsamen Transportrolle (24) gelenkig miteinander verbunden sind.

3. Kartenleser nach Anspruch 2, **dadurch gekennzeichnet, dass** ein Lese- und/oder Schreibkopf (33) des Kartenlesers (20; 40) im Bereich der gemeinsamen Transportrolle (24) vorgesehen ist.

4. Kartenleser nach einem der Ansprüche 1 bis 3, **dadurch gekennzeichnet, dass** die Rückstellkraft durch eine auf die gelenkige Verbindung beider Schwenkarme(21, 22) wirkende Feder (49) gebildet ist.

5. Kartenleser nach einem der vorhergehenden Ansprüche, **dadurch gekennzeichnet, dass** die Transportrollen (23, 24; 23, 25) zwischen den beiden Seitenwänden (44; 45) eines im Querschnitt U-förmigen Schwenkarms (21; 22) gelagert sind.

6. Kartenleser nach Anspruch 5, **dadurch gekennzeichnet, dass** der eine U-förmige Schwenkarm (22) schmaler als der andere U-förmige Schwenkarm(21) ist und zwischen dessen beiden Seitenwände (44) eingreift.

7. Kartenleser nach einem der vorhergehenden Ansprüche, **dadurch gekennzeichnet, dass** auf der den Transportrollen (23, 24, 25) gegenüberliegenden Seite der Kartenbahn jeder Transportrolle (23, 24, 25) jeweils eine Gegenrolle (31, 32, 33) als Gegenlager für die transportierte Karte (2) vorgesehen ist.

## Claims

1. Card reader (20; 40) comprising at least two transport rollers (23, 24, 25) for the card (3), which are disposed behind one another in the card insertion direction (2), wherein the transport rollers (23, 24, 25) are provided on two pivot arms (21, 22) at a distance from the pivot axis (26, 27) of their pivot arm (21, 22), each pivot arm being pivotable in a plane perpendicular to the card path against the action of a restoring force, wherein one pivot arm (22), whose pivot axis (27) is provided in the card insertion direction (2) downstream of its at least one transport roller (24, 25), and the other pivot arm (21), whose pivot axis (26) is provided in the card insertion direction (2) upstream of its at least one transport roller (23, 24), are motionally coupled in opposite directions, **characterized in that** the two pivot arms (21, 22) are hinged to each other between their two pivot axes (26, 27) and each pivot arm (21, 22) comprises at least two transport rollers (23, 24; 24, 25).

2. Card reader according to claim 1, **characterized in that** the two pivot arms (21, 22) are hinged to each other via the axis of rotation (28) of a transport roller (24) which is common to both pivot arms (21, 22).

3. Card reader according to claim 2, **characterized in that** a read and/or write head (33) of the card reader (20; 40) is provided in the area of the common transport roller (24).

4. Card reader according to any one of the claims 1 through 3, **characterized in that** the restoring force is generated by a spring (49) that acts on the hinged connection between the two pivot arms (21, 22).

5. Card reader according to any one of the preceding claims, **characterized in that** the transport rollers (23, 24; 23, 25) are disposed between the two side walls (44; 45) of a pivot arm (21; 22) that has a U-shaped cross-section.

6. Card reader according to claim 5, **characterized in that** one U-shaped pivot arm (22) is narrower than the other U-shaped pivot arm (21) and engages between the two side walls (44) thereof.

7. Card reader according to any one of the preceding claims, **characterized in that** one counter roller (31, 32, 33) is provided as a counter bearing for the transported card (2) on the side of the card path of each transport roller (23, 24, 25) opposite to the transport rollers (23, 24, 25).

## Revendications

1. Lecteur de cartes (20 ; 40) avec au moins deux rouleaux de transport (23, 24, 25) pour la carte (3) qui sont disposés les uns derrière les autres dans la direction (2) d'introduction de la carte, sachant que les rouleaux de transport (23, 24, 25) sont prévus, sur deux bras pivotants (21, 22) qui peuvent respectivement pivoter dans un plan perpendiculaire au parcours de la carte contre l'action d'une force de rappel, à distance de l'axe de pivotement (26, 27) de leur bras pivotant (21, 22), sachant que l'un (22) des bras pivotants, dont l'axe de pivotement (27) est prévu après son rouleau de transport au moins unique (24, 25) dans la direction (2) d'introduction de la carte, et l'autre bras pivotant (21), dont l'axe de pivotement (26) est prévu avant son rouleau de transport au moins unique (23, 24) dans la direction (2) d'introduction de la carte, sont mutuellement couplés en déplacement en sens contraires,
**caractérisé en ce que** les deux bras pivotants (21, 22) sont mutuellement reliés de manière articulée entre leurs deux axes de pivotement (26, 27), et chaque bras pivotant (21, 22) présente au moins deux rouleaux de transport (23, 24 ; 24, 25).

2. Lecteur de cartes selon la revendication 1, **caractérisé en ce que** les deux bras pivotants (21, 22) sont mutuellement reliés de manière articulée par l'intermédiaire de l'axe de rotation (28) d'un rouleau de transport (24) commun aux deux bras pivotants (21, 22).

3. Lecteur de cartes selon la revendication 2, **caractérisé en ce qu'**une tête (35) de lecture et/ou d'écriture du lecteur de cartes (20 ; 40) est prévue dans la région du rouleau de transport commun (24).

4. Lecteur de cartes selon l'une des revendications 1 à 3, **caractérisé en ce que** la force de rappel est fournie par un ressort (49) agissant sur la liaison articulée des deux bras pivotants (21,22).

5. Lecteur de cartes selon l'une des revendications précédentes, **caractérisé en ce que** les rouleaux de transport (23, 24, 25) sont montés entre les deux parois latérales (44 ;45) d'un bras pivotant (21 ; 22) à section en forme de U.

6. Lecteur de cartes selon la revendication 5, **caractérisé en ce que** l'un (22) des bras pivotants en forme de U est plus étroit que l'autre bras pivotant (21) en forme de U et s'engage entre les deux parois latérales (44) de ce dernier.

7. Lecteur de cartes selon l'une des revendications précédentes, **caractérisé en ce qu'**un rouleau opposé respectif (31, 32, 33) est prévu pour chaque rouleau de transport (23, 24, 25) sur le côté du parcours de la carte qui est opposé aux rouleaux de transport (23, 24, 25), comme contre-appui pour la carte transportée (2).
